# EUROPEAN PATENT APPLICATION

(11) **EP 4 358 581 A1**
(43) Date of publication of application: **24.04.2024**
(21) Application number: 22841130.2
(22) Date of filing: 20.06.2022
(51) Int. Cl.: H04W 28/12

(54) **COMMUNICATION METHOD AND APPARATUS**

(30) Priority: 16.07.2021 CN 202110806913
(71) Applicant: Huawei Technologies Co., Ltd., Longgang Shenzhen, Guangdong 518129 (CN)
(72) Inventor: LI, Shengyu, Shenzhen, Guangdong 518129 (CN); GUAN, Lei, Shenzhen, Guangdong 518129 (CN); LI, Ruijie, Shenzhen, Guangdong 518129 (CN); GUO, Zhiheng, Shenzhen, Guangdong 518129 (CN); SONG, Xinghua, Shenzhen, Guangdong 518129 (CN)
(74) Representative: Goddar, Heinz J.
(86) International application number: PCT/CN2022/099803
(87) International publication number: WO 2023/284490

(57) **Abstract**

Embodiments of this application relate to the field of wireless communication technologies and provide a communication method and apparatus, to indicate a terminal to perform second transmission when an SSB or a PRACH on a frequency domain resource overlaps with reverse transmission on another frequency domain resource in time domain. In the method, when the SSB or the PRACH overlaps with the second transmission in time domain, the terminal device may determine, by receiving first indication information, that a priority of the SSB or the PRACH is lower than a priority of the second transmission on an overlapped time domain resource. The terminal device may perform the second transmission based on the first indication information. Based on the foregoing solution, the terminal device may perform reverse transmission on a symbol that overlaps with the SSB or the PRACH, thereby reducing a limitation of the SSB or the PRACH on a transmission direction and increasing resource use flexibility.

## Description

### CROSS-REFERENCE TO RELATED APPLICATION

This application claims priority to Chinese Patent Application No. 202110806913.2, filed with the China National Intellectual Property Administration on July 16, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

A terminal in new radio (new radio, NR) carrier aggregation (carrier aggregation, CA) may perform half-duplex communication. When a plurality of component carriers (component carriers, CCs) are configured for the terminal, if TDD frame structures of these CCs are different, for example, some symbols on a carrier 1 (CC #1) are downlink symbols, and some symbols at a corresponding time domain position on a carrier 2 (CC #2) are uplink symbols, behavior of the terminal in this scenario needs to be specified in a communication protocol. However, terminal behavior specified in a current communication protocol does not take into account different urgency and priorities of ultra-reliable and low-latency communications (ultra-reliable and low-latency communications, URLLC) and enhanced mobile broadband (enhanced mobile broadband, eMBB) transmission, and consequently is difficult to apply to a URLLC scenario. This may cause a large transmission latency.

### SUMMARY

This application provides a communication method and apparatus, to reduce a data transmission latency.

According to a first aspect, a communication method is provided. The method may be performed by a terminal device or performed by a chip used in a terminal device. In the method, the terminal device receives first indication information, where the first indication information indicates that a priority of first transmission on a first transmission occasion is lower than a priority of second transmission. The first transmission is a synchronization signal/physical broadcast channel block (synchronization signal/physical broadcast channel block, SSB) or a physical random access channel (physical random access channel, PRACH) on a first frequency domain resource. The second transmission is transmission on a second frequency domain resource. A transmission direction of the first transmission is different from a transmission direction of the second transmission. The first transmission occasion may overlap with a time domain resource of the second transmission. The terminal device performs the second transmission on the second frequency domain resource based on the first indication information.

Based on the foregoing solution, the terminal may be indicated, by using the first indication information, that a priority of SSB or PRACH transmission on a frequency domain resource is lower than a priority of reverse transmission on another frequency domain resource. For example, on the another frequency domain resource, UE-specific transmission may be configured by using higher layer signaling or scheduled by using physical layer signaling. The transmission may carry high-priority data. Therefore, a priority of the transmission is higher than a priority of cell-specific transmission during initial access, for example, the SSB or the PRACH. After receiving the first indication information, the terminal may perform the reverse transmission on a symbol that overlaps with the cell-specific transmission, thereby reducing a limitation of the cell-specific transmission on a transmission direction and increasing resource use flexibility.

In a possible implementation, the first transmission may be the SSB, and the second transmission may be one of a PRACH, a physical uplink shared channel (physical uplink shared channel, PUSCH), a physical uplink control channel (physical uplink control channel, PUCCH), or a sounding reference signal (sounding reference signal, SRS). Optionally, the PRACH is a contention-free PRACH, for example, PRACH transmission triggered by a network device by using a physical downlink control channel (physical downlink control channel, PDCCH) order (PDCCH order).

In a possible implementation, the first transmission may be the PRACH, and the second transmission may be one of a PDCCH, a physical downlink shared channel (physical downlink shared channel, PDSCH), or a channel state information-reference signal (channel state information-reference signal, CSI-RS). Optionally, the PRACH is a contention-based PRACH, for example, PRACH transmission selected by the terminal during initial access.

In a possible implementation, the first indication information may indicate, by indicating that the first transmission fails or the first transmission occasion fails, that the priority of the first transmission on the first transmission occasion is lower than the priority of the second transmission.

Based on the foregoing solution, it may be explicitly indicated, for the terminal by using the first indication information, that the SSB or the PRACH indicated in a system information block (system information block, SIB) 1 during initial access fails.

In a possible implementation, the first transmission may be periodic transmission, the first transmission may include a plurality of transmission occasions, and the first transmission occasion may be one of the plurality of transmission occasions. The first indication information may include grouping information of the first transmission, and may be used to group the plurality of transmission occasions into M transmission occasion groups. M is an integer greater than or equal to 2. The first transmission occasion may not belong to a first group, and the first group may be a group that is associated with the terminal device and that is in the M transmission occasion groups.

Based on the foregoing solution, grouping information of the SSB or the PRACH is introduced, so that SSB or PRACH transmission is grouped, and different groups correspond to different terminals or UE groups (groups). This supports TDM transmission between different terminals or UE groups, reduces a scheduling limitation of the SSB or PRACH transmission on all terminals, and improves resource use efficiency.

In a possible implementation, the grouping information of the first transmission may include a correspondence between an identifier of the terminal device and the M transmission occasion groups.

In a possible implementation, the first indication information may be carried in a SIB 1.

In a possible implementation, the identifier of the terminal device may be one of a 5G globally unique temporary identity (5G globally unique temporary identity, 5G-GUTI), a 5G shorted-temporary mobile subscriber identity (5G shorted-temporary mobile subscription identity, 5G-S-TMSI), or a SG-temporary mobile subscriber identity (SG-temporary mobile subscriber identity, 5G-TMSI).

In a possible implementation, the first transmission may be periodic transmission, the first transmission may include a plurality of transmission occasions, and the first transmission occasion may be one of the plurality of transmission occasions. The first indication information may be used to determine a first subset, the first subset may be a subset of a set of the plurality of transmission occasions, and a transmission occasion in the first subset is valid for the terminal device. The first transmission occasion may not belong to the first subset.

Based on the foregoing solution, the terminal may be explicitly notified of a subset of valid transmission occasions by using the first indication information. This supports TDM transmission between different terminals or UE groups, reduces a scheduling limitation of SSB or PRACH transmission on all terminals, and improves resource use efficiency.

According to a second aspect, a communication method is provided. The method may be performed by a network device or performed by a chip used in a network device. In the method, the network device sends first indication information, where the first indication information indicates that a priority of first transmission on a first transmission occasion is lower than a priority of second transmission. The first transmission is an SSB or a PRACH on a first frequency domain resource. The second transmission is transmission on a second frequency domain resource. A transmission direction of the first transmission is different from a transmission direction of the second transmission. The first transmission occasion overlaps with a time domain resource of the second transmission. The network device performs the second transmission on the second frequency domain resource.

In a possible implementation, the first transmission may be the SSB, and the second transmission may be one of a PRACH, a PUSCH, a PUCCH, or an SRS. Optionally, the PRACH may be a contention-free PRACH, for example, PRACH transmission triggered by the network device by using a PDCCH order (PDCCH order).

In a possible implementation, the first transmission may be the PRACH, and the second transmission may be one of a PDCCH, a PDSCH, or a CSI-RS. Optionally, the PRACH is a contention-based PRACH, for example, PRACH transmission selected by a terminal during initial access.

In a possible implementation, the first indication information may indicate, by indicating that the first transmission fails or the first transmission occasion fails, that the priority of the first transmission on the first transmission occasion is lower than the priority of the second transmission.

In a possible implementation, the first transmission may be periodic transmission, the first transmission may include a plurality of transmission occasions, and the first transmission occasion may be one of the plurality of transmission occasions. The first indication information may include grouping information of the first transmission, and may be used to group the plurality of transmission occasions into M transmission occasion groups. M is an integer greater than or equal to 2. The first transmission occasion may not belong to a first group, and the first group may be a group that is associated with a terminal device and that is in the M transmission occasion groups.

In a possible implementation, the grouping information of the first transmission may include a correspondence between an identifier of the terminal device and the M transmission occasion groups.

In a possible implementation, the first indication information may be carried in SIB 1.

In a possible implementation, the identifier of the terminal device may be one of a 5G-GUTI, a 5G-S-TMSI, or a 5G-TMSI.

In a possible implementation, the first transmission may be periodic transmission, the first transmission may include a plurality of transmission occasions, and the first transmission occasion may be one of the plurality of transmission occasions. The first indication information may be used to determine a first subset, the first subset may be a subset of a set of the plurality of transmission occasions, and a transmission occasion in the first subset may be valid for the terminal device. The first transmission occasion may not belong to the first subset.

According to a third aspect, a communication apparatus is provided. The apparatus includes a transceiver module and a processing module.

The transceiver module is configured to receive first indication information, where the first indication information indicates that a priority of first transmission on a first transmission occasion is lower than a priority of second transmission. The first transmission is an SSB or a PRACH on a first frequency domain resource. The second transmission is transmission on a second frequency domain resource. A transmission direction of the first transmission is different from a transmission direction of the second transmission. The first transmission occasion overlaps with a time domain resource of the second transmission. The processing module is configured to determine, based on the first indication information, to perform the second transmission on the second frequency domain resource. The transceiver module is further configured to perform the second transmission on the second frequency domain resource. Optionally, the PRACH is a contention-free PRACH, for example, PRACH transmission triggered by a network device by using a PDCCH order (PDCCH order).

In a design, the first transmission is the SSB, and the second transmission is one of a PRACH, a PUSCH, a PUCCH, or an SRS.

In a design, the first transmission is the PRACH, and the second transmission may be one of a PDCCH, a PDSCH, or a CSI-RS. Optionally, the PRACH is a contention-based PRACH, for example, PRACH transmission selected by a terminal during initial access.

In a design, the first indication information indicates, by indicating that the first transmission fails or the first transmission occasion fails, that the priority of the first transmission on the first transmission occasion is lower than the priority of the second transmission.

In a design, the first transmission is periodic transmission, the first transmission includes a plurality of transmission occasions, and the first transmission occasion is one of the plurality of transmission occasions. The first indication information includes grouping information of the first transmission, and is used to group the plurality of transmission occasions into M transmission occasion groups. M is an integer greater than or equal to 2. The first transmission occasion does not belong to a first group, and the first group is a group that is associated with a terminal device and that is in the M transmission occasion groups.

In a design, the grouping information of the first transmission includes a correspondence between an identifier of the terminal device and the M transmission occasion groups.

In a design, the first indication information is carried in a SIB 1.

In a design, the identifier of the terminal device is one of a 5G-GUTI, a 5G-S-TMSI, or a 5G-TMSI.

In a design, the first transmission is periodic transmission, the first transmission includes a plurality of transmission occasions, and the first transmission occasion is one of the plurality of transmission occasions. The first indication information is used to determine a first subset, the first subset is a subset of a set of the plurality of transmission occasions, and a transmission occasion in the first subset is valid for the terminal device. The first transmission occasion does not belong to the first subset.

According to a fourth aspect, a communication apparatus is provided. The apparatus includes a transceiver module and a processing module.

The processing module is configured to generate first indication information, where the first indication information indicates that a priority of first transmission on a first transmission occasion is lower than a priority of second transmission. The first transmission is an SSB or a PRACH on a first frequency domain resource. The second transmission is transmission on a second frequency domain resource. A transmission direction of the first transmission is different from a transmission direction of the second transmission. The first transmission occasion overlaps with a time domain resource of the second transmission. The transceiver module is configured to send the first indication information. The transceiver module is further configured to perform the second transmission on the second frequency domain resource.

In a design, the first transmission may be the SSB, and the second transmission may be one of a PRACH, a PUSCH, a PUCCH, or an SRS. Optionally, the PRACH may be a contention-free PRACH, for example, PRACH transmission triggered by a network device by using a PDCCH order (PDCCH order).

In a design, the first transmission may be the PRACH, and the second transmission may be one of a PDCCH, a PDSCH, or a CSI-RS. Optionally, the PRACH is a contention-based PRACH, for example, PRACH transmission selected by a terminal during initial access.

In a design, the first indication information indicates, by indicating that the first transmission fails or the first transmission occasion fails, that the priority of the first transmission on the first transmission occasion is lower than the priority of the second transmission.

In a design, the first transmission is periodic transmission, the first transmission includes a plurality of transmission occasions, and the first transmission occasion is one of the plurality of transmission occasions. The first indication information includes grouping information of the first transmission, and is used to group the plurality of transmission occasions into M transmission occasion groups. M is an integer greater than or equal to 2. The first transmission occasion does not belong to a first group, and the first group is a group that is associated with a terminal device and that is in the M transmission occasion groups.

In a design, the grouping information of the first transmission includes a correspondence between an identifier of the terminal device and the M transmission occasion groups.

In a design, the first indication information is carried in a SIB 1.

In a design, the identifier of the terminal device is one of a 5G-GUTI, a 5G-S-TMSI, or a 5G-TMSI.

In a design, the first transmission is periodic transmission, the first transmission includes a plurality of transmission occasions, and the first transmission occasion is one of the plurality of transmission occasions. The first indication information is used to determine a first subset, the first subset is a subset of a set of the plurality of transmission occasions, and a transmission occasion in the first subset is valid for the terminal device. The first transmission occasion does not belong to the first subset.

According to a fifth aspect, a communication apparatus is provided. The apparatus includes a processor. The processor is coupled to a memory. The memory is configured to store a computer program or instructions. The processor is configured to execute the computer program or the instructions, to perform the implementations in the first aspect and/or the second aspect. The memory may be located inside or outside the apparatus. There are one or more processors.

According to a sixth aspect, this application provides a communication apparatus, including a processor and an interface circuit. The interface circuit is configured to communicate with another apparatus. The processor is configured to perform the implementations in the first aspect and/or the second aspect.

According to a seventh aspect, a communication apparatus is provided. The apparatus includes a logic circuit and an input/output interface.

In an example, the input/output interface is configured to input first indication information. The first indication information indicates that a priority of first transmission on a first transmission occasion is lower than a priority of second transmission. The first transmission is an SSB or a PRACH on a first frequency domain resource. The second transmission is transmission on a second frequency domain resource. A transmission direction of the first transmission is different from a transmission direction of the second transmission. The first transmission occasion overlaps with a time domain resource of the second transmission. The input/output interface is further configured to perform the second transmission on the second frequency domain resource.

In another example, the logic circuit is configured to generate first indication information. The first indication information indicates that a priority of first transmission on a first transmission occasion is lower than a priority of second transmission. The first transmission is an SSB or a PRACH on a first frequency domain resource. The second transmission is transmission on a second frequency domain resource. A transmission direction of the first transmission is different from a transmission direction of the second transmission. The first transmission occasion overlaps with a time domain resource of the second transmission. The input/output interface is configured to output the first indication information.

According to an eighth aspect, this application provides a communication system, including a terminal device configured to perform the implementations in the first aspect and a network device configured to perform the implementations in the second aspect.

According to a ninth aspect, this application further provides a chip system, including a processor, configured to perform the implementations in the first aspect and/or the second aspect.

According to a tenth aspect, this application further provides a computer program product, including computer-executable instructions. When the computer-executable instructions are run on a computer, the implementations in the first aspect and/or the second aspect are performed.

According to an eleventh aspect, this application further provides a computer-readable storage medium. The computer-readable storage medium stores a computer program or instructions. When the instructions are run on a computer, the implementations in the first aspect and/or the second aspect are performed.

In addition, for beneficial effects of the second aspect to the eleventh aspect, refer to the beneficial effects shown in the first aspect.

### BRIEF DESCRIPTION OF DRAWINGS

FIG. 1 is a schematic diagram of a cell common TDD frame structure;
FIG. 2 is a schematic diagram of an architecture of a communication system according to an embodiment of this application;
FIG. 3 is a schematic diagram of a complementary frame structure;
FIG. 4 is a schematic diagram of data transmission in a URLLC scenario;
FIG. 5 is a schematic diagram of data transmission according to an SSB protection rule;
FIG. 6 is a schematic flowchart of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

For ease of understanding of the technical solutions provided in embodiments of this application, the following explains and describes terms involved in embodiments of this application.
(1) Frequency band (frequency band): It is defined by the International Telecommunication Union (international telecommunication union, ITU) and is generally named as nxx. For example, a band n78 corresponds to a frequency band of 500 Mhz from 3.3 GHz to 3.8 GHz, and it is specified that the band n78 only follows a time division duplex (time division duplex, TDD) mode.
(2) Component carrier (CC): A basic unit for an operator to deploy a spectrum or a frequency domain resource. Generally, one frequency band includes a plurality of CCs. One CC corresponds to a spectrum position in frequency domain, and includes a start position and a bandwidth, for example, 100 MHz, 80 MHz, 40 MHz, 20 MHz, 10 MHz and 5 MHz, and two sides generally include guard bands (guard bands).
   It should be noted that, in the current long term evolution (long term evolution, LTE) technology and NR, a frame structure is configured in a unit of a CC. In other words, in a case in which a dynamic TDD frame structure is not considered, a TDD frame structure in one CC remains unchanged, and TDD frame structures of different CCs may be different.
(3) Bandwidth part (bandwidth part, BWP): One CC includes a plurality of BWPs. Different BWPs support different subcarrier spacings, to match different services. The plurality of BWPs may share a center frequency but have different bandwidths, so that a terminal can work on different bandwidths as required. This saves energy and power. Different BWPs have different bandwidths, so that a plurality of terminals with capabilities can select BWPs based on the capabilities of the terminals, to ensure more flexible resource allocation.
   Currently, no guard band is reserved on two sides of a BWP. If subcarrier spacings (subcarrier spacings, SCSs) of two BWPs are different, how to avoid interference is determined by a base station. One BWP has one SCS. In other words, the SCS is configured in a unit of a BWP. In frequency domain, the BWP corresponds to a spectrum position on a CC. A start position of the BWP is relative to a start position of the CC, and a bandwidth is generally represented by a quantity of resource blocks (resource blocks, RBs).
(4) Subband (subband): One BWP includes a plurality of RBs, and generally exceeds a width of coherence bandwidth of a channel. Therefore, a concept of a subband is generally introduced during real data scheduling, transmission, and channel sounding. One subband includes one or more RBs. For example, during channel sounding, it is usually assumed that channels on one subband are the same. During scheduling, it may alternatively be assumed that precoding matrices on one subband are the same. It should be noted that a subband is sometimes referred to as a precoding RB group (precoding RB group). In embodiments of this application, a subband represents a continuous spectrum.
(5) RB and subcarrier (subcarrier, SC): One RB includes 12 consecutive subcarriers SCs. One SC is the smallest frequency domain unit in the LTE system and the NR system and can carry one modulation symbol.

The following describes a TTD frame structure configuration method in embodiments of this application.

### NR time domain structure

A unit of a time domain transmission resource in NR is a frame (frame), a half-frame (Half-frame), a subframe (subframe), a slot (Slot), or an orthogonal frequency division multiplexing (orthogonal frequency division multiplexing, OFDM) symbol (Symbol). A length of a frame is fixed at 10 ms, a length of a half-frame is fixed at 5 ms, and a length of a subframe is fixed at 1 ms. A length of a slot and a length of a symbol are related to a subcarrier spacing. For a normal cyclic prefix, one slot includes 14 symbols. For an extended cyclic prefix, one slot includes 12 symbols. Assuming that a subcarrier spacing is SCS=2^{µ}×15KHz, one subframe includes 2^{µ} slots, where µ is an SCS index (index), and a value of µ is 0, 1, 2, 3, ..., or the like.

### TDD frame structure

A basis of a TDD frame structure in NR is a transmission direction, and the smallest unit for determining is an OFDM symbol. For a TDD carrier, a transmission direction on a symbol may be downlink D, uplink U, or flexible F. A flexible symbol indicates that downlink transmission may be performed on the symbol, or uplink transmission may be performed on the symbol, and is used for uplink-downlink switching. A frame structure is generally represented in a unit of a slot or a symbol. For example, aD:bS:cU represents that a TDD uplink-downlink switching periodicity is a+b+c slots, the first a slots are downlink (downlink, DL) slots, the middle b slots are flexible slots, which are also referred to as special slots, and the last c slots are uplink (uplink, UL) slots. The foregoing a, b, and c are positive integers. A flexible slot may be represented as xD:yF:zU, representing that in the slot, the first x symbols are downlink symbols, the middle y symbols are flexible symbols, and the last z symbols are uplink symbols. The foregoing x, y, and z are positive integers.

Cell common TDD frame structure configuration: It is indicated by higher layer signaling tdd-UL-DL-ConfigurationCommon (tdd-UL-DL-ConfigurationCommon), where the signaling is carried in a system message or cell-specific configuration information, and may include one subcarrier spacing and one pattern (pattern). The pattern indicates one periodicity P, in a unit of ms. Both the periodicity and the configured subcarrier spacing are used to determine a quantity of slots in the periodicity. The pattern further indicates a quantity of DL slots d_slot, a quantity of DL symbols d_sym, a quantity of UL slots u_slot, and a quantity of UL symbols u_sym.

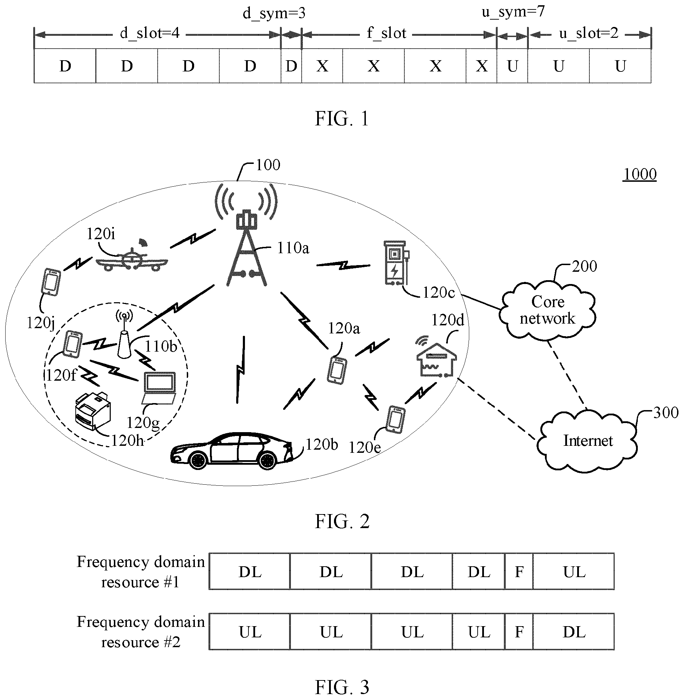

Refer to FIG. 1. SCS=30 kHz, P=5 ms, and symbols in the first d_slot=4 slots and d_sym=3 symbols in a subsequent slot are DL symbols, represented by D. Symbols in the last u_slot=2 slots and u_sym=7 symbols in a previous slot of the two slots are UL symbols, represented by U. All symbols that are not indicated in the middle are flexible symbols f_slot, represented by X. It should be noted that a flexible symbol may be in a plurality of slots.

In some embodiments, the tdd-UL-DL-ConfigurationCommon indicates two patterns, the two patterns respectively indicate two frame structures, lengths of the two patterns are P1 and P2, and a total frame structure is a series connection of the frame structures shown in FIG. 1.

UE-specific TDD frame structure configuration: It is indicated by higher layer signaling tdd-UL-DL-ConfigurationDedicated (tdd-UL-DL-ConfigurationDedicated). This signaling is a supplementary solution to the foregoing frame structure indicated by the tdd-UL-DL-ConfigurationCommon.

Assuming that a periodicity of the frame structure indicated by the tdd-UL-DL-ConfigurationCommon includes N slots, the tdd-UL-DL-ConfigurationDedicated includes a group of TDD-UL-DL-SlotConfig (TDD-UL-DL-SlotConfig). Each TDD-UL-DL-SlotConfig is used to configure a frame structure of one of the N slots, and may indicate that the frame structure is downlink-only or uplink-only, or indicate a quantity of downlink symbols and a quantity of uplink symbols. The downlink symbol is located before the uplink symbol in time domain.

It should be noted that the tdd-UL-DL-ConfigurationDedicated only configures a communication direction of a flexible symbol indicated in tdd-UL-DL-ConfigurationCommon.

Downlink control information (downlink control information, DCI) for dynamically indicating a TDD frame structure: The terminal may be configured to detect a DCI format 2_0 (DCI format 2_0), and the DCI format indicates a TDD frame structure on one group of CCs. Specifically, for one CC, the DCI only modifies a communication direction of a symbol in a flexible slot after the foregoing frame structure is configured.

FIG. 2 a schematic diagram of an architecture of a communication system 1000 used in an embodiment of this application. As shown in FIG. 2, the communication system includes a radio access network 100 and a core network 200. Optionally, the communication system 1000 may further include an internet 300. The radio access network 100 may include at least one radio access network device (for example, 110a and 110b in FIG. 2), and may further include at least one terminal (for example, 120a to 120j in FIG. 2). The terminal is connected to the radio access network device in a wireless manner, and the radio access network device is connected to the core network device in a wireless or wired manner. A core network device and a radio access network device may be different independent physical devices, or functions of the core network device and logical functions of the radio access network device may be integrated into one physical device, or some functions of the core network device and some functions of the radio access network device may be integrated into one physical device. Terminals may be connected to each other and radio access network devices may be connected to each other in a wired or wireless manner. FIG. 2 is merely a schematic diagram, and the communication system may further include another network device, for example, may further include a wireless relay device and a wireless backhaul device that are not drawn in FIG. 2.

The radio access network device may also be referred to as a network device, and may be a base station (base station), an evolved NodeB (evolved NodeB, eNodeB), a transmission reception point (transmission reception point, TRP), a next generation NodeB (next generation NodeB, gNB) in a fifth generation (5th generation, 5G) mobile communication system, a next generation NodeB in a sixth generation (6th generation, 6G) mobile communication system, a base station in a future mobile communication system, an access node in a Wi-Fi system, or the like, or may be a module or unit that completes some functions of the base station, for example, may be a central unit (central unit, CU), or may be a distributed unit (distributed unit, DU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications of a 3rd generation partnership project (3rd generation partnership project, 3GPP). The radio access network device may be a macro base station (for example, 110a in FIG. 2), or may be a micro base station or an indoor base station (for example, 110b in FIG. 2), or may be a relay node or a donor node. A specific technology and a specific device form that are used by the radio access network device are not limited in embodiments of this application. For ease of description, the following uses an example in which a base station is used as a radio access network device for description.

The terminal may also be referred to as a terminal device, user equipment (user equipment, UE), a mobile station, a mobile terminal, or the like. The terminal may be widely used in various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, smart grid, smart furniture, smart office, smart wear, smart transportation, and smart city. The terminal may be a mobile phone, a tablet computer, a computer having a wireless transceiver function, a wearable device, a vehicle, an unmanned aerial vehicle, a helicopter, an airplane, a ship, a robot, a robot arm, a smart home device, or the like. A specific technology and a specific device form that are used by the terminal are not limited in embodiments of this application.

The base station and the terminal may be located at a fixed position, or may be mobile. The base station and the terminal may be deployed on land, including an indoor or outdoor device, a handheld device, or a vehicle-mounted device, may be deployed on water, or may be deployed on an airplane, a balloon, or a satellite in air. Application scenarios of the base station and the terminal device are not limited in embodiments of this application.

Roles of the base station and the terminal may be relative. For example, a helicopter or an unmanned aerial vehicle 120i in FIG. 2 may be configured as a mobile base station. For a terminal 120j that accesses the radio access network 100 by using a 120i, the terminal 120i is a base station. However, for a base station 110a, the terminal 120i is a terminal, that is, the 110a and the 120i communicate with each other by using a wireless air interface protocol. Certainly, the 110a and the 120i may alternatively communicate with each other by using an interface protocol between base stations. In this case, for the 1 10a, the 120i is also a base station. Therefore, both the base station and the terminal may be collectively referred to as communication apparatuses. The 110a and the 110b in FIG. 2 may be referred to as communication apparatuses having a function of the base station, and the 120a to 120j in FIG. 2 may be referred to as communication apparatuses having a function of the terminal.

Communication may be performed between a base station and a terminal, between a base stations, and between terminals by using a licensed spectrum, by using an unlicensed spectrum, by simultaneously using a licensed spectrum and an unlicensed spectrum, by using a spectrum below 6 gigahertz (gigahertz, GHz), by using a spectrum above 6 GHz, or by simultaneously using a spectrum below 6 GHz and a spectrum above 6 GHz. A spectrum resource used in wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station may be a control center in the foregoing application scenarios such as smart grid, industrial control, smart transportation, and smart city. The function of the terminal may alternatively be performed by a module (for example, a chip or a modem) in the terminal, or may be performed by an apparatus including a function of the terminal.

In this application, the base station sends a downlink signal or downlink information to the terminal, where the downlink information is carried in a downlink channel. The terminal sends an uplink signal or uplink information to the base station, where the uplink information is carried in an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered by a signal from a neighboring cell.

In embodiments of this application, a time domain symbol may be an OFDM symbol, or may be a Discrete Fourier Transform-spread-OFDM (Discrete Fourier Transform-spread-OFDM, DFT-s-OFDM) symbol. Unless otherwise specified, symbols in embodiments of this application are all time domain symbols.

It may be understood that, in embodiments of this application, a PDSCH, a PDCCH, a PUSCH, and a PUCCH are merely used as examples of a downlink data channel, a downlink control channel, an uplink control channel, and an uplink data channel. In different systems and different scenarios, a data channel and a control channel may have different names, and this is not limited in embodiments of this application. In this application, a signal may include a data channel, a control channel, and a reference signal. Signal transmission may be uplink transmission, that is, the terminal sends the signal to the base station, or may be downlink transmission, that is, the base station sends the signal to the terminal. When the transmission is used as a verb, the transmission may be interchanged with the sending/receiving.

A traditional macro base station is deployed by using either frequency division duplex (frequency division duplex, FDD) or TDD. In a TDD deployment scenario, if a downlink data packet reaches an uplink slot, downlink data packet needs to wait for several slots before a downlink transmission resource is available. A waiting latency is excessively long. Similarly, if the terminal fails to decode a downlink data after the downlink data is transmitted, the terminal needs to wait for several slots to reach an uplink slot to feed back a positive acknowledgment (acknowledgment, ACK) or a negative acknowledgment (negative acknowledgment, NACK) indicating whether the downlink data is correctly decoded, and then the base station can be triggered to retransmit the data. Retransmission waiting time is excessively long.

Due to the foregoing problems, existing TDD cannot meet a low-latency requirement of a URLLC service.

To resolve the foregoing problems, a design solution of a complementary frame structure is proposed. Refer to FIG. 3. Another frequency domain resource whose frame structure is 3U:1S:1D is introduced based on an existing frequency domain resource whose frame structure is 3D:1S:1U, to form complementation. In this way, a downlink resource and an uplink resource are available at any moment. A frequency domain resource is dynamically selected, so that no extra waiting latency can be ensured. In addition, because each frequency domain resource is of a TDD frame structure, a downlink transmission channel may be estimated by using an uplink reference signal. This improves spectral efficiency.

However, when different frequency domain resources of the two frame structures are located in one frequency band, the terminal usually does not have a capability of simultaneously receiving downlink data and sending uplink data. Therefore, a sending or receiving behavior of the terminal needs to be specified.

In NRCA, terminal half-duplex is proposed. To be specific, when a terminal is configured with a plurality of CCs, if TDD frame structures of these CCs are different, for example, some symbols on a carrier 1 (CC #1) are downlink symbols, and some symbols at a corresponding time domain position on a carrier 2 (CC #2) are uplink symbols, behavior of the terminal in this scenario needs to be specified in a protocol. Currently, the protocol defines half-duplex-behavior of the terminal as follows:
The terminal is configured with a group of CCs, is not configured to detect a DCI format 2_0, that is, the terminal does not support dynamically modifying a slot format (slot format) by using the DCI, and is configured with half-duplex-behavior (half-duplex-behavior) = 'enable' (enable), that is, the terminal needs to perform a half-duplex operation. The protocol specifies that the terminal has a capability of following the following half-duplex collision resolution rules:
Rule #1: SSB protection principle. An SSB may include a synchronization signal (synchronization signal, SS) and a physical broadcast channel (physical broadcast channel, PBCH). No uplink transmission is performed on a transmission symbol of an SSB indicated by a system message or cell common configuration information on any CC in the foregoing one group of CCs. If a PUSCH, a PUCCH, and a PRACH conflict with an SSB symbol, transmission of the PUSCH, the PUCCH, and the PRACH are canceled. If an SRS conflicts with the SSB, only SRS transmission on a conflict symbol is canceled.
Rule #2: PRACH protection principle. For any valid PRACH occasion (occasion), if downlink transmission (except the SSB, such as a PDCCH, a PDSCH, or a CSI-RS) overlaps with the valid PRACH occasion, or overlaps with N_{gap} OFDM symbols before the valid PRACH occasion, the terminal does not receive the downlink transmission. That a PRACH occasion is valid means: (1) an OFDM symbol in which the PRACH occasion is located is an uplink symbol, (2) the PRACH occasion is not before an SSB occasion in a slot in which the PRACH occasion is located, and (3) no SSB transmission is performed on N_{gap} OFDM symbols before the PRACH occasion, where a parameter N_{gap} is a value predefined in a protocol or indicated by a base station.
Rule #3: Common search space (common search space, CSS) #0 protection principle. At a position in CSS #0 indicated in a master information block (master information block, MIB), it is not expected that any cell configures an overlapping symbol as an uplink symbol. The terminal needs to detect and schedule a SIB 1 at the position in CSS #0.

The foregoing plurality of rules do not consider that URLLC transmission and eMBB transmission have different urgency and priorities, and therefore are not friendly to an RLLCC application. Specifically, the rule #1 to the rule #3 may be simply summarized as cell-specific (cell-specific) signal protection rules. Because the SSB, the PRACH, and the CSS #0 are all cell-specific, that is, are the same for all terminals, and are configured for initial access, the base station cannot choose not to send the signals, or the base station cannot stop sending the signals for a long time. Therefore, priorities of these signals are high. If there is reverse transmission conflicting with the signals, the reverse transmission needs to be discarded.

For some typical URLLC applications, these rules have a large problem. For example, in a future factory automation application, data arrival of each user is periodic and the periodicity is fixed. For example, a data packet arrives at an interval of 4 ms or 6 ms. To maximize resource use efficiency, data packets of a terminal arrive and are evenly distributed as much as possible in the future factory, so that all resources in a service periodicity are fully used.

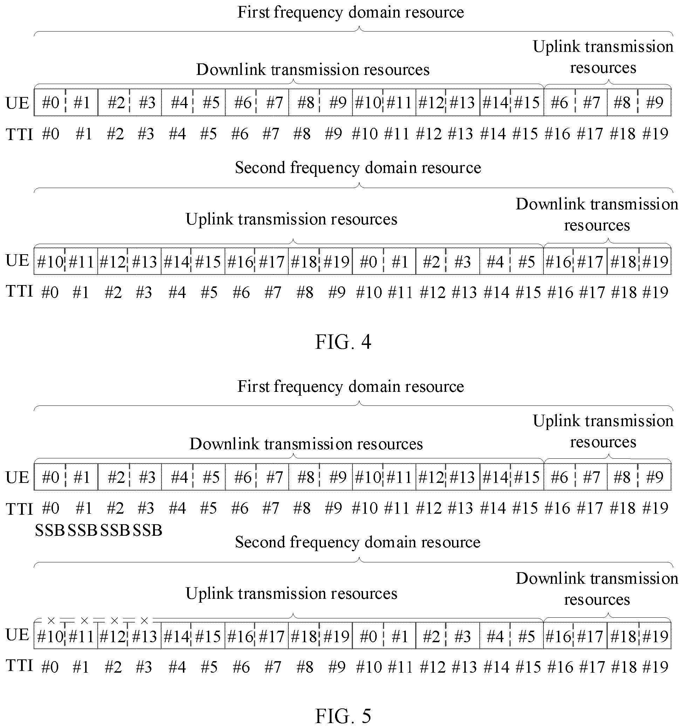

Refer to FIG. 4. It is assumed that a service arrival periodicity is 4 ms. In a 30 kHz subcarrier spacing and a 7-OFDM symbol (OFDM symbol, OS) transmission time interval (transmission time interval, TTI), one periodicity includes 16 TTIs, and downlink data of 16 groups of terminals arrives at each TTI. Specifically, in FIG. 4, downlink transmission resources of UE #0 to UE #15 are at a TTI #0 to a TTI #15 on a first frequency domain resource, and downlink transmission resources of UE #16 to UE #19 are at a TTI #16 to a TTI #19 on a second frequency domain resource. Uplink transmission resources of the UE #0 to the UE #5 are at a TTI #10 to a TTI #15 on the second frequency domain resource, uplink transmission resources of the UE #6 to the UE #9 are at a TTI #16 to a TTI #19 on the first frequency domain resource, and uplink transmission resources of the UE #10 to the UE #19 are at a TTI #0 to a TTI #9 on the second frequency domain resource. Because the terminal does not support sending data on one CC while receiving data on another CC, arrival of uplink data and arrival of downlink data of the terminal may have an offset, and are arranged at different TTIs. However, to maximize resource use efficiency, downlink transmission of a terminal or a UE group (UE group) #n in one TTI definitely corresponds to uplink transmission of another terminal or UE group (UE group) #m.

In this case, in consideration of the foregoing cell-specific signal protection rules, some resources cannot be used for data transmission of the terminal. An SSB is used as an example. Refer to FIG. 5, if SSB transmission exists at TTIs #0, #1, #2, and #3, an uplink resource on another CC in a corresponding TTI cannot be used for uplink transmission of any terminal. In other words, UEs or UE groups #10, #11, #12, and #13 in the figure are canceled due to a conflict with the SSB. In addition, considering that the SSB is periodic transmission, and service arrival is also periodic transmission, when two periodicities are not aligned, data of each group of terminals may encounter the SSB at a moment. For example, an SSB periodicity is 20 ms, and a service periodicity is 6 ms. To be specific, 24 groups of terminals encounter the SSB at a moment. In this case, a least common multiple is 60 ms, data of each group of terminals arrives 10 times within 60 ms, and data of 12 groups of terminals conflicts with the SSB at some moments.

Based on the foregoing problems, an embodiment of this application provides a communication method, to agree on behavior of a terminal when an uplink-downlink conflict occurs between cell-specific transmission and UE-specific (UE-specific) transmission of a terminal. The following separately describes cell-specific transmission and UE-specific transmission.
I. The cell-specific transmission may be transmission of a cell-specific signal. The cell-specific signal is a signal that has same transmission configuration for all terminals. Optionally, the cell-specific signal is a signal that needs to be received or sent in a process in which the terminal accesses a cell and changes from an idle (Idle) state to a connected (Connected) state. In embodiments of this application, the cell-specific signal includes a downlink common signal and an uplink common signal.
   1. Downlink common signal: A downlink common signal used for initial access, and used to identify a cell, complete downlink timing synchronization, and obtain basic configuration information of a cell, for example, a PDCCH on the SSB and in the CSS #0 (also referred to as Type0-PDCCH CSS) in NR.

Alternatively, the downlink common signal functionally includes a downlink synchronization signal, a downlink broadcast channel carrying a MIB, a PDSCH carrying a SIB 1, and a PDCCH in the CSS #0. DCI carried in the PDCCH indicates the PDSCH carrying the SIB 1. The following separately describes different downlink common signals.
(1) SSB: It includes a synchronization signal SS and a physical broadcast channel PBCH. The synchronization signal includes a primary synchronization signal (primary SS, PSS) and a secondary synchronization signal (secondary SS, SSS). The PBCH carries a MIB for accessing a cell. The two are jointly used to obtain a cell identity (identity, ID), downlink timing synchronization, and a most important system message, for example, obtain a time domain position and a frequency domain position at which a subsequent SIB 1 is located.
(2) SIB 1: After detecting the SSB, the terminal may complete downlink timing synchronization, and then determine, based on a time domain position and a frequency domain position of the current SSB and an SSB index, a time domain position and a frequency domain position of a PDCCH configured to schedule the SIB 1. Specifically, a frequency domain position of the PDCCH is referred to as a control resource set (control resource set, CORESET) #0 in NR, and a time domain position is referred to as CSS #0 or Type0-PDCCH CSS. A correspondence between a time domain position and a frequency domain position of the SSB, the CORESET #0, and the CSS #0 is not described herein in detail. It should be understood that one SSB index corresponds to one transmission position of the CSS #0.

A time domain position at which the terminal receives the PDCCH is configured by using search space (search space, SS). Generally, the terminal is configured with CSS and some UE-specific search space (UE-specific search space, USS). The CSS includes Type0-PDCCH CSS, TypeOA-PDCCH CSS, Type1-PDCCH CSS, Type2-PDCCH CSS, and Type3-PDCCH CSS. In the CSS, the Type0-PDCCH CSS is a PDCCH used by a user to receive and schedule a SIB 1, and is generally used for initial access. Other CSS is common, but is not used for initial access. The USS is separately configured for each terminal, that is, configured for each UE. Different terminals may be staggered through time division multiplexing (dime division multiplexing, TDM).

2. Uplink common signal: information used by the terminal to perform random access, and used to complete uplink timing synchronization between the terminal and a cell and complete a function of registering the terminal in the cell, for example, a PRACH in NR.
(1) PRACH: It may include PRACH transmission in 4-step RACH (4-Step RACH) and PRACH transmission in two-step RACH (2-Step RACH). In embodiments of this application, the PRACH is the first transmission in the 4-step RACH, namely, a message 1 (Msg1), or may be the first transmission in the 2-step RACH, namely, a message A (MsgA).

II. The UE-specific transmission is transmission of a UE-specific signal. The UE-specific signal means that the signal is sent to a specific terminal rather than to all terminals in a cell, and the UE-specific transmission may include downlink transmission and uplink transmission.
1. Downlink transmission: It includes PDCCH transmission, PDSCH transmission, and downlink reference signal transmission, for example, CSI-RS transmission, and further includes UE-specific SSB transmission.
   (1) PDCCH transmission: It at least includes PDCCH transmission in the USS. Alternatively, the PDCCH transmission further includes PDCCH transmission in other CSS other than the CSS #0, for example, PDCCH transmission in the TypeOA-PDCCH CSS, Type1-PDCCH CSS and Type2-PDCCH CSS, and PDCCH transmission in the Type3-PDCCH CSS.
   (2) PDSCH transmission: It at least includes PDSCH transmission scheduled by using DCI carried by a PDCCH in the USS, and semi-persistent scheduling PDSCH transmission configured by using radio resource control (radio resource control, RRC) signaling, for example, semi-persistent scheduling (semi-persistent scheduling, SPS) PDSCH transmission. Alternatively, the PDSCH transmission further includes PDSCH transmission scheduled by a PDCCH on another CSS other than the CSS #0, for example, PDSCH transmission scheduled by a PDCCH on the TypeOA-PDCCH CSS, Type1-PDCCH CSS and Type2-PDCCH CSS.
   (3) CSI-RS transmission: It includes periodic (periodic, P) CSI-RS transmission configured by using RRC signaling, semi-persistent (semi-persistent, SP) CSI-RS transmission activated by using a medium access control (medium access control, MAC) control element (control element, CE) or DCI, and aperiodic (aperiodic, A) CSI-RS transmission dynamically activated by using DCI.
   (4) UE-specific SSB transmission: SSB transmission configured by using UE-specific signaling, for example, RRC signaling.
2. Uplink transmission: It includes PUSCH transmission, PUCCH transmission, and SRS transmission, and further includes UE-specific PRACH transmission.
   (1) PUSCH transmission: It at least includes PUSCH transmission scheduled by DCI on a PDCCH in the USS and configuration grant (configured grant, CG) PUSCH transmission configured by using RRC signaling. Alternatively, the PUSCH transmission further includes PUSCH transmission scheduled by a random access response (random access response, RAR) UL grant.
   (2) PUCCH transmission: It includes PUCCH transmission carrying hybrid automatic repeat request (hybrid automatic repeat request, HARQ)-ACK transmission, scheduling request (scheduling request, SR) transmission, or beam failure recovery (beam failure recovery, BFR) transmission and CSI. The PUCCH transmission carrying the HARQ-ACK includes HARQ-ACK transmission of the SPS PDSCH and PDSCH transmission scheduled by the DCI, and may further include HARQ-ACK transmission of the PDSCH scheduled by the PDCCH on another CSS other than the CSS #0. PUCCH transmission carrying an SR/BFR is periodic PUCCH transmission configured by using RRC signaling, and when a higher layer triggers a physical layer to send an SR or a BFR on a corresponding PUCCH resource, the PUCCH transmission is actually performed; otherwise, the PUCCH transmission may be skipped. The PUCCH transmission carrying CSI includes periodic CSI transmission configured by using RRC signaling and semi-periodic CSI transmission activated by a MAC CE.
   (3) SRS transmission: It includes periodic SRS (P-SRS) transmission configured by using RRC signaling, semi-persistent SRS (SP-SRS) transmission activated by using a MAC CE, and aperiodic SRS (A-SRS) transmission activated by using DCI.
   (4) UE-specific PRACH transmission: It includes contention-free PRACH transmission, for example, PRACH transmission triggered by a PDCCH order.

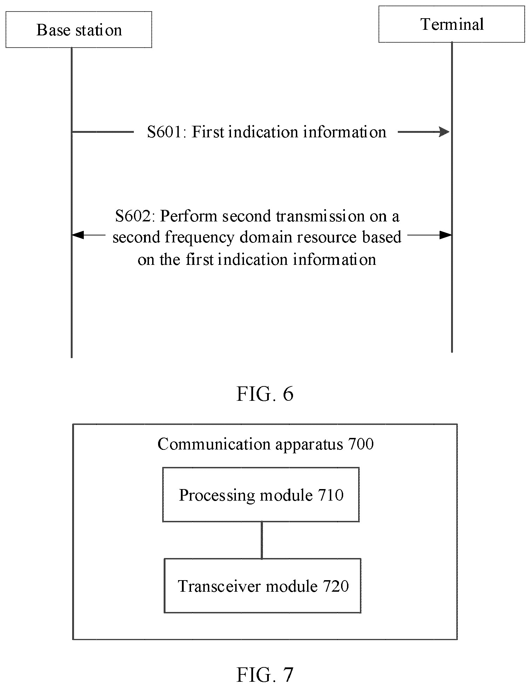

FIG. 6 is a schematic flowchart of a communication method according to an embodiment of this application. The method may include the following operations.

S601: A base station sends first indication information, and a corresponding terminal receives the first indication information.

The first indication information may indicate that a priority of first transmission on the first transmission occasion is lower than a priority of second transmission.

In a possible implementation, the first transmission may be cell-specific transmission on a first frequency domain resource, and the second transmission may be UE-specific transmission on a second frequency domain resource. Specifically, the first transmission may be cell-specific transmission during initial access. The first transmission may be cell-specific downlink transmission, and the second transmission may be UE-specific uplink transmission. Alternatively, the first transmission may be cell-specific uplink transmission, and the second transmission may be UE-specific downlink transmission.

For example, the first transmission may be an SSB, and the second transmission is one of a PRACH, a PUSCH, a PUCCH, or an SRS. Optionally, that the first transmission is an SSB means that the first transmission is an SSB configured in a SIB 1, and that the second transmission is a PRACH may mean that the second transmission is a contention-free PRACH.

For another example, the first transmission may be a PRACH, and the second transmission may be one of a PDCCH, a PDSCH, or a CSI-RS. Optionally, that the first transmission is a PRACH may mean that the first transmission is a contention-based PRACH.

In a possible implementation, both the first transmission and the second transmission may be the cell-specific transmission. For example, the first transmission is an SSB, and the second transmission is a PRACH. Optionally, the PRACH is a contention-based PRACH.

In an example, the first transmission occasion overlaps with a time domain resource of the second transmission. It should be understood that the foregoing overlapping may be generalized overlapping, and may correspond to any one of the following cases: (1) A time domain OFDM symbol occupied by the first transmission occasion partially or completely overlaps with a time domain OFDM symbol occupied by the second transmission. (2) An OFDM symbol occupied by the first transmission occasion does not overlap with an OFDM symbol occupied by the second transmission, but the OFDM symbol occupied by the first transmission occasion overlaps with N1 OFDM symbols before the second transmission, or the OFDM symbol occupied by the first transmission occasion overlaps with N2 OFDM symbols after the second transmission, or M1 OFDM symbols before the first transmission occasion overlap with the OFDM symbol occupied by the second transmission, or M2 OFDM symbols after the first transmission occasion overlap with the OFDM symbol occupied by the second transmission, where N1, N2, M1, and M2 may be predefined parameters or parameters indicated by the base station. (3) The first transmission occasion and the second transmission are in a slot, and an OFDM symbol occupied by the second transmission is located in time domain before an OFDM symbol occupied by the first transmission occasion.

In a possible implementation, the first frequency domain resource and the second frequency domain resource may be configured by the base station for the terminal. Specifically, the base station may send configuration information of the first frequency domain resource and configuration information of the second frequency domain resource.

The first frequency domain resource and the second frequency domain resource may be two CCs on two frequency bands, or may be two CCs on one frequency band, or may be two BWPs on one CC, or may be two subbands on one BWP.

Optionally, the first frequency domain resource and the second frequency domain resource may be one frequency domain resource. For example, the first frequency domain resource and the second frequency domain resource are one BWP. Correspondingly, subsequent first transmission and second transmission may be transmission that occupies different RBs on the BWP.

In a possible implementation, the terminal does not support performing reverse transmission on the first frequency domain resource and the second frequency domain resource at the same time. For example, the terminal does not support sending a signal at the same moment on the second frequency domain resource while receiving a signal at a moment on the first frequency domain resource. Alternatively, the terminal does not support receiving a signal at the same moment on the second frequency domain resource while sending a signal at a moment on the first frequency domain resource.

Further, the base station sends configuration information of the first transmission and configuration information of the second transmission to the terminal. The configuration information of the first transmission may include a plurality of transmission occasions of the first transmission and a frequency domain resource occupied by each transmission occasion. The frequency domain resource occupied by each transmission occasion may be on the first frequency domain resource. The first transmission occasion is one of the plurality of transmission occasions of the first transmission. The configuration information of the second transmission may include a time domain resource and a frequency domain resource of the second transmission, and the frequency domain resource of the second transmission may be on the second frequency domain resource.

Optionally, the first transmission is periodic transmission. For example, the first transmission is the SSB, and the SSB is periodically and repeatedly transmitted. In each periodicity, there are a plurality of transmission occasions, and the SSB may be sent on each transmission occasion. For another example, the first transmission is the PRACH, and the PRACH resource is periodic. In each periodicity, there are a plurality of transmission occasions, and the PRACH may be sent on each transmission occasion.

S602: The terminal performs the second transmission on the second frequency domain resource based on the first indication information. Correspondingly, the base station performs the second transmission on the second frequency domain resource. When the second transmission is uplink transmission, the terminal sends an uplink signal to the base station on the second frequency domain resource based on the first indication information. Correspondingly, the base station receives the uplink signal from the terminal on the second frequency domain resource. When the second transmission is downlink transmission, the base station sends a downlink signal to the terminal on the second frequency domain resource. Correspondingly, the terminal receives the downlink signal from the base station on the second frequency domain resource based on the first indication information.

Based on the foregoing solution, the first indication information may be used to indicate that the priority of the first transmission on the first transmission occasion is lower than the priority of the second transmission. Therefore, the terminal may perform reverse transmission (second transmission) on a resource that overlaps with the cell-specific transmission in time domain, so that a limitation on a transmission direction of the cell-specific transmission can be reduced, and resource use flexibility can be increased.

Correspondingly, the terminal stops the first transmission on the first transmission occasion on the first frequency domain resource. The stopping the first transmission includes: (1) discarding/canceling the entire first transmission, that is, not performing the first transmission; and (2) discarding/canceling a part of the first transmission, for example, canceling a part of the first transmission on a symbol that overlaps with a time domain of the second transmission. Specifically, when the first transmission is downlink transmission, for example, the SSB, the terminal does not receive or does not expect to receive the first transmission. Correspondingly, if a measurement quantity is associated with the first transmission, the terminal does not update the measurement quantity. When the first transmission is uplink transmission, for example, the PRACH, the terminal does not send or is not allowed to send the first transmission.

In embodiments of this application, although a function of the first indication information is to indicate that the priority of the first transmission on the first transmission occasion is lower than the priority of the second transmission, the first indication information may have different implementations. The following separately describes the implementations.

Case 1: The first indication information indicates that the first transmission occasion fails, or the first indication information indicates that the first transmission fails.

The first indication information may be carried in RRC signaling, or may be carried in a MAC CE, or may be carried in DCI. The first indication information may indicate that the first transmission occasion fails, that is, is used to close or disable (disable) the first transmission on the first transmission occasion. For example, the first transmission is the SSB, and the first indication information indicates that the terminal does not need to detect or receive SSB transmission on a first SSB occasion. For another example, the first transmission is the PRACH, and the first indication information indicates that the terminal cannot send the PRACH on a first PRACH occasion. Alternatively, the first indication information may indicate that the first transmission fails, that is, is used to disable all cell-specific transmission during initial access. For example, the first indication information is used to disable all SSB transmission indicated in a SIB 1 and/or PRACH transmission configured by using RACH configuration signaling in a SIB 1.

The terminal may determine to perform the second transmission on the second frequency domain resource based on the first indication information.

Optionally, the terminal may further receive second indication information. The second indication information is UE-specific. For example, the second indication information is sent to the terminal by using UE-specific RRC signaling, a MAC CE, or DCI, indicates a new transmission occasion or a time domain position and a frequency domain position of new transmission for performing the first transmission. For example, after initial access, the base station indicates, to the terminal by using the UE-specific RRC signaling, a group of a new time domain position and a new frequency domain position to transmit the SSB, and the terminal detects the SSB at the new time domain position and the new frequency domain position. For another example, after initial access, the base station indicates, to the terminal by using the UE-specific RRC signaling, a group of a new time domain position and a new frequency domain position to send the PRACH, and the terminal sends a contention-based PRACH and a contention-free PRACH at the new time domain position and the new frequency domain position.

The following describes in detail the communication method provided in embodiments of this application by separately using different types of first transmission as an example.
(1) The first transmission is SSB transmission indicated in the SIB 1, for example, SSB transmission indicated by ssb-PositioninBurst.

The first indication information may indicate that the SSB transmission indicated in the SIB 1 fails in an initial access process, and the terminal does not need to detect and measure these SSBs. Optionally, SSB measurement and reporting indicated in the SIB 1 also fail. In other words, the SSB does not participate in corresponding SSB measurement and reporting this time. The terminal may perform, on the second frequency domain resource, the second transmission that overlaps with an SSB transmission occasion in time domain.

Optionally, the base station may send the second indication information to the terminal, and correspondingly, the terminal may receive the second indication information. The second indication information may indicate a group of UE-specific SSBs. Optionally, the UE-specific SSBs indicated by the second indication information are still transmitted on one or more SSB transmission positions in a set of SSB transmission positions predefined in a protocol, and the second indication information may indicate a periodicity of the UE-specific SSB transmission and a specific transmission position of the UE-specific SSB.

(2) The first transmission is PDCCH transmission in CSS #0.

The first indication information may indicate that the PDCCH transmission in the CSS #0 fails in an initial access process, and the terminal does not need to detect the PDCCH in the CSS #0. The terminal may perform, on the second frequency domain resource, the second transmission that overlaps with the PDCCH in the CSS #0 in time domain.

Optionally, the base station configures new USS or another CSS for the terminal by using the second indication information, to receive, in a connected state, a PDCCH that schedules the SIB 1.

On the time domain resource of the CSS #0, an OFDM symbol corresponding to the second frequency domain resource may be an uplink symbol or a flexible symbol.

(3) The first transmission is PRACH transmission indicated in the SIB 1, for example, PRACH transmission indicated by using RACH Configuration.

The first indication information indicates that the PRACH transmission configured in the SIB 1 fails, and the terminal cannot spontaneously send the PRACH on a PRACH resource indicated by the base station. The terminal may perform the second transmission on the second frequency domain resource that overlaps with the PRACH resource in time domain, that is, receive a downlink signal.

Optionally, the base station may configure a UE-specific PRACH resource for the terminal by using the second indication information.

Based on the foregoing solution, the first indication information is introduced, so that the terminal may be clearly notified that cell-specific transmission during initial access fails, and it is clearly specified that after receiving the first indication information, the terminal may perform reverse transmission on a symbol that overlaps with the cell-specific transmission, thereby avoiding a limitation of the cell-specific transmission on a transmission direction and increasing resource use flexibility. In addition, the second indication information may be introduced, so that the cell-specific transmission is changed to the UE-specific transmission, thereby implementing TDM transmission between different terminals.

Case 2: The first indication information indicates grouping information of the first transmission.

The first transmission may be periodic transmission, and may include a plurality of transmission occasions. The first indication information may be used to group the plurality of transmission occasions into M transmission occasion groups, where M is an integer greater than or equal to 2. The first indication information may be carried in the SIB 1, or may be carried RRC signaling after initial and random access, in other words, in RRC signaling after RRC establishment.

When the first transmission occasion does not belong to a first group, the terminal may perform, on the second frequency domain resource, the second transmission that overlaps with the first transmission occasion in time domain. The first group may be a group that is associated with the terminal and that is in the M transmission occasion groups. In other words, when the first indication information indicates that only the first group is associated with the terminal, that is, only a transmission occasion in the first group is valid for the terminal. If the first transmission occasion does not belong to the first group, it indicates that the first transmission occasion is invalid for the terminal. In this case, the terminal may perform the second transmission on a time domain resource with which the first transmission occasion overlaps.

Optionally, the grouping information of the first transmission may include a correspondence between an identifier of the terminal and the M transmission occasion groups. The terminal may determine, based on the correspondence between the identifier of the terminal and the M transmission occasion groups, whether the first transmission occasion belongs to the first group.

Optionally, the identifier of the terminal may be an identifier before random access, for example, may be one of a 5G-GUTI, a 5G-S-TMSI, or a 5G-TMSI. Alternatively, the identifier of the terminal may be a cell-radio network temporary identifier (cell-radio network temporary identifier, C-RNTI) or an identifier of another temporary terminal indicated by the base station.

For example, if the transmission occasions of the first transmission are grouped into M groups, and the identifier of the terminal is x, the first group associated with the terminal may be the ((x mod M)+1)^{th} group. It should be understood that the correspondence between the identifier of the terminal and the M transmission occasion groups is merely an example, and is not intended to limit the first group associated with the terminal.

The following describes in detail the communication method provided in embodiments of this application by separately using different types of first transmission as an example.
(1) The first transmission is SSB transmission.

The first indication information indicates grouping information of SSBs indicated in the SIB 1 in an initial access process. For example, the first indication information indicates that the SSBs are grouped into M groups.

For example, the first indication information may include a quantity M of groups, an SSB periodicity corresponding to each group, and/or an SSB transmission position in the periodicity. For example, when M=2, a first group of SSBs and a second group of SSBs correspond to a transmission periodicity of 20 ms, the first group is located in a first half-frame in the transmission periodicity of 20 ms, and the second group is located in a second half-frame in the periodicity of 20 ms, or both the first group and the second group are located in a first half-frame in the periodicity of 20 ms, but the first group corresponds to SSB indexes #0 to #3, and the second group corresponds to SSB indexes #4 to #7.

The first indication information may further include a correspondence between an SSB group and a UE ID.

Optionally, the first indication information may be carried in the SIB 1. In this case, the UE ID may be one of a 5G-GUTI, a 5G-S-TMSI, or a 5G-TMSI.

Alternatively, the first indication information is carried in RRC signaling after initial and random access, in other words, in RRC signaling after RRC establishment. In this case, the UE ID may be a C-RNTI or another temporary UE ID indicated by a base station.

Optionally, the first indication information may be classified into first sub indication information and second sub indication information. The first sub indication information indicates grouping information of SSBs. For example, the first sub indication information may include a quantity M of groups, an SSB periodicity corresponding to each group, and/or an SSB transmission position in the periodicity. The first sub indication information may be carried in the SIB 1 or the RRC signaling after RRC establishment. The second sub indication information may indicate a number of an SSB group corresponding to the terminal, and the second sub indication information may be carried in RRC signaling, a MAC CE, or DCI. For example, the second sub indication information may be separately notified to each terminal by using UE-specific indication information.

(2) The first transmission is PDCCH transmission in CSS #0.

The first indication information may be the first indication information used for the SSB transmission shown in (1). To be specific, the terminal detects the PDCCH only in CSS #0 associated with an SSB group that corresponds to the UE ID of the terminal, and does not need to detect the PDCCH at a position in CSS #0 of an SSB group that does not correspond to the UE ID of the terminal.

Optionally, the first indication information may be different from the first indication information used for the SSB transmission shown in (1). The first indication information may be carried in the SIB 1 or carried in RRC signaling after RRC establishment, indicating a quantity of groups of the CSS #0 and a transmission position of each group of the CSS #0.

For example, the first indication information may include a quantity M of groups, and a CSS #0 transmission position corresponding to each group.

The first indication information may further include a correspondence between an SSB group and a UE ID. The UE ID may be one of a 5G-GUTI, a 5G-S-TMSI, a 5G-TMSI, a C-RNTI, or another temporary UE ID indicated by the base station.

Optionally, the first indication information may be classified into first sub indication information and second sub indication information. The first sub indication information indicates grouping information of the CSS #0. For example, the first sub indication information may include a quantity M of groups and a CSS #0 transmission position corresponding to each group. The first sub indication information may be carried in the SIB 1 or RRC signaling after RRC establishment. The second sub indication information may indicate a number of a CSS #0 group corresponding to the terminal, and the second sub indication information may be carried in RRC signaling, a MAC CE, or DCI. For example, the second sub indication information may be separately notified to each terminal by using UE-specific indication information.

(3) The first transmission is PRACH transmission.

The first indication information indicates grouping information of PRACH transmission configured in the SIB 1. For example, indication information of a quantity M of groups is included.

For example, the first indication information may include a quantity M of groups, a PRACH periodicity corresponding to each group, and/or a PRACH transmission position in the periodicity. For example, each PRACH group corresponds to a PRACH configuration index (prach-ConfigurationIndex), and the prach-ConfigurationIndex may indicate an index of each PRACH group, and may be used to determine a time domain resource position of each PRACH group.

The first indication information may further include a correspondence between a PRACH group and a UE ID.

Optionally, the first indication information may be carried in the SIB 1. In this case, the UE ID may be an ID of the terminal before random access, for example, one of a 5G-GUTI, a 5G-S-TMSI, or a 5G-TMSI.

Alternatively, the first indication information may be carried in RRC signaling after initial and random access, in other words, RRC signaling after RRC establishment. In this case, the UE ID may be a C-RNTI of the terminal or another temporary UE ID indicated by the base station.

Optionally, the first indication information may be classified into first sub indication information and second sub indication information. The first sub indication information indicates grouping information of the PRACHs, for example, including a quantity M of groups, a PRACH periodicity corresponding to each group, and/or a PRACH transmission position in the periodicity. The first sub indication information may be carried in the SIB 1 or RRC signaling after RRC establishment. The second sub indication information may indicate a number of a PRACH group corresponding to the terminal, and the second sub indication information may be carried in RRC signaling, a MAC CE, or DCI. For example, the second sub indication information may be separately notified to each UE by using UE-specific indication information.

Based on the foregoing case 2, the terminal may determine, based on the first indication information, whether the first transmission occasion belongs to a cell-specific transmission group corresponding to the UE ID of the terminal. When the first transmission occasion belongs to the cell-specific transmission group corresponding to the UE ID of the terminal, the priority of the first transmission is higher than the priority of the second transmission. In other words, the terminal performs the first transmission on the first transmission occasion, and skips the second transmission. When the first transmission occasion does not belong to the cell-specific transmission group corresponding to the UE ID of the terminal, the priority of the first transmission is lower than the priority of the second transmission. In other words, the terminal performs the second transmission on the second frequency domain resource.

Based on the foregoing solution, the grouping information of the cell-specific transmission is introduced, so that cell-specific transmission is changed to UE-specific transmission, namely, UE group-specific transmission. This supports TDM transmission between different UEs or UE groups, avoids a scheduling limitation of cell-specific transmission on all UEs, and improves resource use efficiency.

Case 3: The first indication information indicates a first subset.

The first subset may be a subset of a set of the plurality of transmission occasions of the first transmission. The base station may indicate, to the terminal by using the first indication information, that the transmission occasion in the first subset is valid (valid) for the terminal.

In an example, the plurality of transmission occasions of the first transmission may be grouped into a plurality of subsets, and each subset has an index. The base station may indicate the index of the first subset to the terminal by using the first indication information, to indicate, to the terminal, that the first subset is valid.

In another example, the first indication information may include the plurality of transmission occasions, and these transmission occasions may be considered as a first subset. The base station may indicate the plurality of transmission occasions to the terminal by using the first indication information.

When the first transmission occasion does not belong to the first subset, the terminal may perform, on the second frequency domain resource, the second transmission that overlaps with cell-specific transmission in time domain. When the first transmission occasion belongs to the first subset, the terminal may perform the cell-specific transmission, and abandon the second transmission.

Based on the foregoing solution, the cell-specific transmission may be divided into a plurality of groups, and the first indication information may be used to indicate a subset of valid transmission occasions to the terminal. This supports TDM transmission between different terminals, avoids a scheduling limitation of the cell-specific transmission on all terminals, and improves resource use efficiency.

In the foregoing communication method, the base station may indicate, to the terminal by using the first indication information, that a priority of the cell-specific transmission is lower than the priority of the second transmission. The following describes another communication method provided in an embodiment of this application. Priorities of cell-specific transmission and UE-specific transmission may be predefined in a protocol, so that when the cell-specific transmission overlaps with the UE-specific transmission in time domain, a terminal may determine, according to a rule predefined in the protocol, to perform the cell-specific transmission or the UE-specific transmission.

In a possible implementation, an example in which first transmission is downlink transmission, and second transmission is uplink transmission is used. A first frequency domain resource corresponds to a first TDD frame structure, a second frequency domain resource corresponds to a second TDD frame structure, the first TDD frame structure on an OFDM symbol occupied by a first transmission occasion may be a downlink symbol or a flexible symbol, and the second TDD frame structure on an OFDM symbol occupied by the second transmission may be an uplink symbol or a flexible symbol. The downlink symbol, the uplink symbol, and the flexible symbol may be determined by using configuration information of a cell common TDD frame structure, or may be determined by using configuration information of a UE-specific TDD frame structure, or may be determined by using DCI.

It may be understood that, to implement functions in the foregoing embodiments, the base station and the terminal include corresponding hardware structures and/or software modules for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraints of technical solutions.

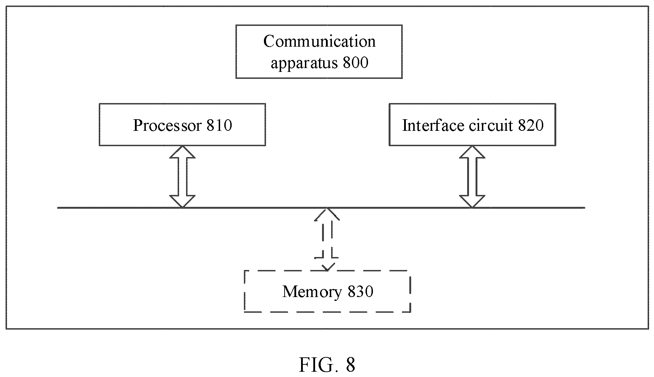

FIG. 7 and FIG. 8 are schematic diagrams of structures of possible communication apparatuses according to embodiments of this application. The communication apparatuses may be configured to implement a function of the UE or the base station in the foregoing method embodiments. Therefore, beneficial effects of the foregoing method embodiments can also be implemented. In embodiments of this application, each communication apparatus may be one of the terminals 120a to 120j shown in FIG. 2, or may be the base station 110a or 110b shown in FIG. 2, or may be a module (for example, a chip) used in a terminal or a base station.

As shown in FIG. 7, a communication apparatus 700 includes a processing module 710 and a transceiver module 720. The communication apparatus 700 is configured to implement a function of the terminal or the base station in the method embodiment shown in FIG. 6.

When the communication apparatus 700 is configured to implement the function of the terminal in the method embodiment shown in FIG. 6, the transceiver module 720 is configured to receive first indication information, and the processing module 710 is configured to demodulate and/or decode the first indication information. The transceiver module is further configured to perform second transmission on a second frequency domain resource based on the first indication information.

When the communication apparatus 700 is configured to implement the function of the base station in the method embodiment shown in FIG. 6, the processing module 710 is configured to generate first indication information. The transceiver module 720 is configured to send the first indication information. The transceiver module 720 is further configured to perform second transmission on a second frequency domain resource.

For more detailed descriptions of the processing module 710 and the transceiver module 720, directly refer to related descriptions in the method embodiment shown in FIG. 6. Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run instructions, or store data generated after the processor 810 runs instructions.

When the communication apparatus 800 is configured to implement the method shown in FIG. 6, the processor 810 is configured to implement a function of the processing module 710, and the interface circuit 820 is configured to implement a function of the transceiver module 720.

When the communication apparatus is a chip used in a terminal, the chip in the terminal implements the function of the terminal in the foregoing method embodiment. The chip in the terminal receives information from another module (for example, a radio frequency module or an antenna) in the terminal, where the information is sent by the base station to the terminal, or the chip in the terminal sends information to another module (for example, a radio frequency module or an antenna) in the terminal, where the information is sent by the terminal to the base station.

When the communication apparatus is a module used in the base station, the module in the base station implements the function of the base station in the foregoing method embodiment. The module in the base station receives information from another module (for example, a radio frequency module or an antenna) in the base station, where the information is sent by the terminal to the base station, or the module in the base station sends information to another module (for example, a radio frequency module or an antenna) in the base station, where the information is sent by the base station to the terminal. The module in the base station herein may be a baseband chip of the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write information to the storage medium. Certainly, the storage medium may be a component of the processor. The processor and the storage medium may be disposed in an ASIC. In addition, the ASIC may be located in a base station or a terminal. Certainly, the processor and the storage medium may exist in the base station or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or nonvolatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists. A and B each may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A, including B, including C, including A and B, including A and C, including B and C, or including A, B, and C.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, performed by a terminal device or a module used in a terminal device, wherein the method comprises:
receiving first indication information, wherein the first indication information indicates that a priority of first transmission on a first transmission occasion is lower than a priority of second transmission, wherein the first transmission is a synchronization signal/physical broadcast channel block SSB or a physical random access channel PRACH on a first frequency domain resource, the second transmission is transmission on a second frequency domain resource, a transmission direction of the first transmission is different from a transmission direction of the second transmission, and the first transmission occasion overlaps with a time domain resource of the second transmission; and
performing the second transmission on the second frequency domain resource based on the first indication information.

2. The method according to claim 1, wherein the first transmission is the SSB, and the second transmission is one of a PRACH, a physical uplink shared channel PUSCH, a physical uplink control channel PUCCH, or a sounding reference signal SRS.

3. The method according to claim 1, wherein the first transmission is the PRACH, and the second transmission is one of a physical downlink control channel PDCCH, a physical downlink shared channel PDSCH, or a channel state information-reference signal CSI-RS.

4. The method according to any one of claims 1 to 3, wherein the first indication information indicates, by indicating that the first transmission fails or the first transmission occasion fails, that the priority of the first transmission on the first transmission occasion is lower than the priority of the second transmission.

5. The method according to any one of claims 1 to 4, wherein the first transmission is periodic transmission, the first transmission comprises a plurality of transmission occasions, and the first transmission occasion is one of the plurality of transmission occasions;
the first indication information comprises grouping information of the first transmission, and is used to group the plurality of transmission occasions into M transmission occasion groups, wherein M is an integer greater than or equal to 2; and
the first transmission occasion does not belong to a first group, and the first group is a group that is associated with the terminal device and that is in the M transmission occasion groups.

6. The method according to claim 5, wherein the grouping information of the first transmission comprises a correspondence between an identifier of the terminal device and the M transmission occasion groups.

7. The method according to claim 6, wherein the identifier of the terminal device is one of a 5G globally unique temporary identity 5G-GUTI, a 5G shorted-temporary mobile subscriber identity 5G-S-TMSI, or a SG-temporary mobile subscriber identity 5G-TMSI.

8. The method according to any one of claims 1 to 7, wherein the first indication information is carried in a system information block SIB 1.

9. The method according to any one of claims 1 to 4, wherein the first transmission is periodic transmission, the first transmission comprises a plurality of transmission occasions, and the first transmission occasion is one of the plurality of transmission occasions;
the first indication information is used to determine a first subset, the first subset is a subset of a set of the plurality of transmission occasions, and a transmission occasion in the first subset is valid for the terminal device; and
the first transmission occasion does not belong to the first subset.

10. The method according to any one of claims 1 to 9, wherein the first frequency domain resource and the second frequency domain resource are two component carriers in one frequency band, or the first frequency domain resource and the second frequency domain resource are two component carriers in two frequency bands, or the first frequency domain resource and the second frequency domain resource are two bandwidth parts in one component carrier, or the first frequency domain resource and the second frequency domain resource are two subbands in one bandwidth part.

11. A communication method, performed by a network device or a module used in a network device, wherein the method comprises:
sending first indication information, wherein the first indication information indicates that a priority of first transmission on a first transmission occasion is lower than a priority of second transmission, wherein the first transmission is a synchronization signal/physical broadcast channel block SSB or a physical random access channel PRACH on a first frequency domain resource, the second transmission is transmission on a second frequency domain resource, a transmission direction of the first transmission is different from a transmission direction of the second transmission, and the first transmission occasion overlaps with a time domain resource of the second transmission; and
performing the second transmission on the second frequency domain resource.

12. The method according to claim 11, wherein the first transmission is the SSB, and the second transmission is one of a PRACH, a physical uplink shared channel PUSCH, a physical uplink control channel PUCCH, or a sounding reference signal SRS.

13. The method according to claim 11, wherein the first transmission is the PRACH, and the second transmission is one of a physical downlink control channel PDCCH, a physical downlink shared channel PDSCH, or a channel state information-reference signal CSI-RS.

14. The method according to any one of claims 11 to 13, wherein the first indication information indicates, by indicating that the first transmission fails or the first transmission occasion fails, that the priority of the first transmission on the first transmission occasion is lower than the priority of the second transmission.

15. The method according to any one of claims 11 to 14, wherein the first transmission is periodic transmission, the first transmission comprises a plurality of transmission occasions, and the first transmission occasion is one of the plurality of transmission occasions;
the first indication information comprises grouping information of the first transmission, and is used to group the plurality of transmission occasions into M transmission occasion groups, wherein M is an integer greater than or equal to 2; and
the first transmission occasion does not belong to a first group, and the first group is a group that is associated with a terminal device and that is in the M transmission occasion groups.

16. The method according to claim 15, wherein the grouping information of the first transmission comprises a correspondence between an identifier of the terminal device and the M transmission occasion groups.

17. The method according to claim 16, wherein the identifier of the terminal device is one of a 5G globally unique temporary identity 5G-GUTI, a 5G shorted-temporary mobile subscriber identity 5G-S-TMSI, or a SG-temporary mobile subscriber identity 5G-TMSI.

18. The method according to any one of claims 11 to 17, wherein the first indication information is carried in a system information block SIB 1.

19. The method according to any one of claims 11 to 14, wherein the first transmission is periodic transmission, the first transmission comprises a plurality of transmission occasions, and the first transmission occasion is one of the plurality of transmission occasions;
the first indication information is used to determine a first subset, the first subset is a subset of a set of the plurality of transmission occasions, and a transmission occasion in the first subset is valid for the terminal device; and
the first transmission occasion does not belong to the first subset.

20. The method according to any one of claims 1 to 19, wherein the first frequency domain resource and the second frequency domain resource are two component carriers in one frequency band, or the first frequency domain resource and the second frequency domain resource are two component carriers in two frequency bands, or the first frequency domain resource and the second frequency domain resource are two bandwidth parts in one component carrier, or the first frequency domain resource and the second frequency domain resource are two subbands in one bandwidth part.

21. A communication apparatus, comprising a module configured to perform the method according to any one of claims 1 to 10, or comprising a module configured to perform the method according to any one of claims 11 to 20.

22. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 10 or the method according to any one of claims 11 to 20 through a logic circuit or by executing code instructions.

23. A computer-readable storage medium, wherein the storage medium stores computer programs or instructions, and when the computer programs or instructions are executed by a communication apparatus, the method according to any one of claims 1 to 10 or the method according to any one of claims 11 to 20 is implemented.
